# EUROPEAN PATENT APPLICATION

(11) **EP 4 679 302 A1**
(43) Date of publication of application: **14.01.2026**
(21) Application number: 24187504.6
(22) Date of filing: 09.07.2024
(51) Int. Cl.: G06F 21/30, G06F 21/57, G06F 21/64, H04L 9/32

(54) **METHOD FOR REMOTELY VERIFYING THE CONFIGURATION OF A LOCAL AGENT OF A VIRTUAL MACHINE, EXECUTED WITHIN A HARDWARE-BASED TRUSTED EXECUTION ENVIRONMENT, VIA A PROTOCOL INCLUDING REMOTE ATTESTATION**

(71) Applicant: Cysec SA, 1015 Lausanne (CH)
(72) Inventor: TRINKLER, Patrick, 1180 Rolle (CH)
(74) Representative: Plasseraud IP

(57) **Abstract**

A method for remotely verifying the configuration of a local agent (8) of a virtual machine (2), executed withing a hardware-based Trusted Execution Environment, via a protocol including remote attestation, the virtual machine (2) comprising said local agent (8) and being connected to a remote server (4) comprising a verifier (10), the method comprising:
- customizing (100), at a remote server side, a predetermined configuration of the local agent (8);
- signing (102), at the remote server side, said predetermined configuration of the local agent (8) with predetermined cryptographic assets;
- receiving (104), at the verifier (10), said cryptographic assets;
- remotely configuring (106), at a cloud side, the launch of the virtual machine (2) and inserting at least one of said cryptographic assets into attestable and immutable fields of a configuration of the virtual machine (2);
- launching (108), at the cloud side, the boot of the virtual machine (2) by using said configuration of the virtual machine (2) and starting the local agent (8) by using said configuration of the local agent (8),
- verifying (110), at a local agent (8) side and before continuing the boot process of the virtual machine (2), the authenticity and/or integrity of the configuration of the local agent (8) by using the at least one of said cryptographic assets of the attestable and immutable fields of the configuration of the virtual machine (2) to which it has access;
- in case of valid verification of the authenticity and/or integrity of the configuration of the local agent (8), at the virtual machine (2) side and before continuing the boot process of the virtual machine (2), establishing (112) a communication channel (6) between the local agent (8) and the verifier (10) based on the said configuration of the local agent (8);
- forwarding (114), at the virtual machine (2) side and before continuing the boot process of the virtual machine (2), to the verifier (10) an attestation report requested by the local agent (8);
- comparing (116), at the verifier (10) side and before continuing the boot process of the virtual machine (2), values of said attestable and immutable fields of the attestation report wherein cryptographic assets have been inserted with the corresponding received cryptographic assets to check compliance.

## Description

### Background

### Technical field

The present application relates to a method for remotely verifying the configuration of a local agent of a virtual machine, executed withing a hardware-based Trusted Execution Environment, via a protocol including remote attestation.

### Related art

Most companies working with confidential or critical information are held to stringent requirements and regulations regarding their handling, processing and storage of said information. Most of the time, those requirements are tied to the confidentiality and integrity of the data at rest, in transit and in use. This, in turn, imposes quite significant restrictions to the hardware they can use, along with its geographical location, due to governmental oversight concerns. Cloud Service Providers (CSPs) such as Amazon, Google, Microsoft provide, among many other services, computer infrastructure in the form of virtual machines that their clients may use to host their applications, databases, back-end logic and such.

While protection of the confidentiality and integrity of the data at rest and in transit to and from infrastructure provided by CSPs would be reasonable to achieve through pre-existing technologies, adequate protection of data in use would be much more difficult to achieve. As such, due to the constraints imposed to companies handling confidential or critical data, they would be unable to make use of the CSPs' offerings.

Trusted Computing comes as a stepping-stone technology that allows hardware manufacturers to ensure that only authorised code may run on a system. Most mechanisms rely upon the use of digital signatures to authenticate code, and by burning relevant cryptographic material to support this code authentication within the hardware itself.

Confidential Computing technologies rise as a logical next step, providing the ability of protecting the confidentiality and integrity of data at use. Confidential Computing is the protection of applications and data in use by a hardware-based TEE (Trusted Execution Environment). Though the use of Trusted-Computing-capable hardware, a Trusted Execution Environment (TEE) is provided such that the data in use is only accessible by the code running in the TEE. Confidential Computing also provides the means to ensure that only authorised code may run within the TEE.

Confidential computing can be implemented at the virtual machine level or at the application level, and the choice of the level depends on the chosen threat actors. Virtual machines executed within a confidential computing context are called confidential virtual machines. Applications executed partly or fully within a confidential computing context can be called confidential applications or confidential containers or confidential libraries depending on the case under consideration.

Some companies working with confidential or critical data would still need to ensure that only expected code is running within a distant TEE hosted by a shared infrastructure. The same kinds of concerns can apply to the protection of data in-use that are processed within a distant TEE.

To help ensure the right code is running within the TEE or the TEE-provided protection of data in-use is enabled, the hardware backing the Trusted Execution Environment provides mechanisms known as remote attestation which allow the hardware and its developers to endorse the code running within the TEE and the data in-use protection. This mechanism allows for relevant parties to receive an attestation report signed by the TEE owner or hardware developer containing relevant information (firmware versions, policies, content hashes, ...) necessary to ensure that the TEE is in an expected and valid state and take appropriate trust decisions regarding the TEE itself.

Remote attestation is a way of proving that a computer system is trustworthy: it allows a program to authenticate itself and it is a means for one system (a trusted device) to make reliable statements about the software it is running to another system. A remote party can then make authorization decisions based on this information.

The remote attestation mechanism allows therefore a remote party to verify that a protection mechanism of the data in use is activated and it is used to verify the state of a virtual machine (or of an application) before sending sensitive data to it.

The remote attestation mechanism allows the integrity check of pieces of code. However, it does not allow the check of the authenticity and integrity of variables that by essence can change.

In general, protocols relying on the remote attestation mechanism have an architecture including a local agent running in the virtual machine (or in the application) and communicating with the remote party (or entity). This local agent can request attestation reports to the hardware-based Trusted Execution Environment of the virtual machine and forward them to a verifier of the remote party.

The verifier can verify those attestation reports and decide to send sensitive data to the local agent if the reports are valid.

The communication between the local agent and the verifier shall be made through a secure channel. This means that the channel must be mutually authenticated before being encrypted.

In the case of a protocol attesting the launch of a virtual machine, the authentication of the local agent by the verifier can be obtained by combining the use of fields that are defined when the VM is configured and that will be included in the attestation reports provided by the local agent and having specific characteristics with the capability of said local agent to crash properly the system in case of detection of an invalid system state.

Concerning the reverse authentication of the verifier by the local agent, it can simply be implemented with a pair of private-public keys of the verifier. The public key is stored in the local agent and the private key is stored in the remote verifier.

The public key is stored in the local agent together with other parameters that form the configuration of the agent. One of the goals of the configuration is the identification and the authentication of the verifier.

It is known that the configuration stored in the local agent of the virtual machine can be modified by a malicious attacker that has access to the instance image that is sent to the hypervisor hosting the virtual machine. Since it may happen that the hypervisor experiences a security breach and then becomes part of threat actors, it is essential to be able to detect a possible modification of the configuration of the local agent by a malicious third party.

One simple approach to solve the above-mentioned problem of malicious modification of the configuration of the local agent is to hard code said configuration within the local agent and to include the verification of the integrity of this local agent in a chain of trust anchored in the attestation report.

However, this approach prevents the virtual machine owner from easily changing the parameters of the configuration of the local agent without deleting the virtual machine.

All the above reasonings explained with reference to the local agent of a virtual machine are also applicable to a local agent of an application executed within a hardware-based Trusted Execution Environment.

There is therefore the need to have a method for remotely verifying the configuration of a local agent of a virtual machine, executed withing a hardware-based Trusted Execution Environment, via a protocol including remote attestation that prevents a third party from modifying the same configuration without being noticed, thus overcoming the problems of the prior art.

### Summary

In a first aspect, there is provided a method for remotely verifying the configuration of a local agent of a virtual machine, executed withing a hardware-based Trusted Execution Environment, via a protocol including remote attestation, the virtual machine comprising said local agent and being connected to a remote server comprising a verifier, the method comprising:
- customizing, at a remote server side, a predetermined configuration of the local agent;
- signing, at the remote server side, said predetermined configuration of the local agent with predetermined cryptographic assets;
- receiving, at the verifier, said cryptographic assets;
- remotely configuring, at a cloud side, the launch of the virtual machine and inserting at least one of said cryptographic assets into attestable and immutable fields of a configuration of the virtual machine;
- launching, at the cloud side, the boot of the virtual machine by using said configuration of the virtual machine and starting the local agent by using said configuration of the local agent,
- verifying, at a local agent side and before continuing the boot process of the virtual machine, the authenticity and/or integrity of the configuration of the local agent by using the at least one of said cryptographic assets of the attestable and immutable fields of the configuration of the virtual machine to which it has access;
- in case of valid verification of the authenticity and/or integrity of the configuration of the local agent, at the virtual machine side and before continuing the boot process of the virtual machine, establishing a communication channel between the local agent and the verifier based on the said configuration of the local agent;
- forwarding, at the virtual machine side and before continuing the boot process of the virtual machine, to the verifier, an attestation report requested by the local agent;
- comparing, at the verifier side and before continuing the boot process of the virtual machine, values of said attestable and immutable fields of the attestation report wherein cryptographic assets have been inserted with the corresponding received cryptographic assets to check compliance.

In an embodiment, the method further comprises deciding, at the verifier side, to allow the boot process of the virtual machine to continue or to abort based on the results of said comparison.

In an embodiment, the method further comprises deciding whether to continue the boot process of the virtual machine based on the values of other fields of the attestation report.

In an embodiment, customizing the predetermined configuration of the local agent comprises setting predetermined parameters to be assigned to the local agent.

In an embodiment, the parameters comprise the IP address of the verifier, protocols and network parameters necessary to establish a communication with the verifier, a public key of the verifier for certificate verification, details of a proxy.

In an embodiment, the cryptographic assets are a public key and a private key, the configuration of the local agent is signed with the private key and the verification of the authenticity and/or integrity of the configuration of the local agent is performed with the public key.

In an embodiment, the attestable and immutable fields are FAMILY _10 and IMAGE_ID of the SEV-SNP feature of AMD CPU.

Also comprised herein is a computer program product comprising computer readable instructions which, when implemented on a system comprising a server and a virtual machine executed in a hardware-based Trusted Execution Environment, perform all the steps of the method of the first aspect.

Also comprised is a computer readable medium comprising said computer program.

### Brief description of the drawings

The invention will now be described with reference to the accompanying Figures of which:
Figure 1 illustrates a system comprising a virtual machine and a remote server to perform a method for remotely verifying the configuration of a local agent of a virtual machine via a protocol including remote attestation according to the present invention; and
Figure 2 illustrates the steps of a method for remotely verifying the configuration of a local agent of a virtual machine, executed withing a hardware-based Trusted Execution Environment, via a protocol including remote attestation according to the present invention.

### Detailed Description

Briefly, the method according to the present invention exploits the use of one or more values of fields attached to a virtual machine to verify the integrity and authenticity of the configuration of a local agent of the virtual machine, these values being defined by the virtual machine owner and being attested in an attestation report.

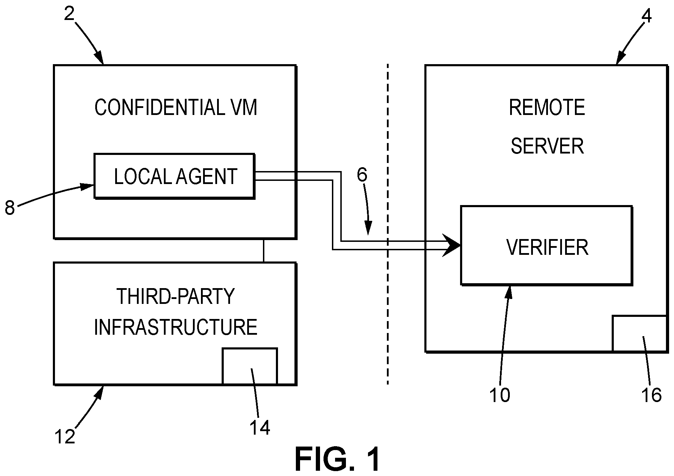

Figure 1 shows a virtual machine 2 connected to a remote server 4 (remote party) through a channel 6. The virtual machine 2 is placed in an untrusted environment, the hosting cloud, and it is owned by a virtual machine owner, who is located at the remote server side, which is a trusted environment. In addition to the verifier 10, the remote server 4 contains a storage 16 allowing storing digital assets.

The virtual machine 2 comprises a local agent 8 and the remote server 4 comprises a verifier 10. The virtual machine 2 is a confidential virtual machine hosted in a hardware-based Trusted Execution Environment generated by a technology called confidential computing, provided by a third-party infrastructure 12 through a respective CPU 14.

The CPU 14 is arranged to provide to the local agent 8 an attestation report under request, and the local agent 8 is arranged to send such attestation report to the verifier 10, in a manner per se known.

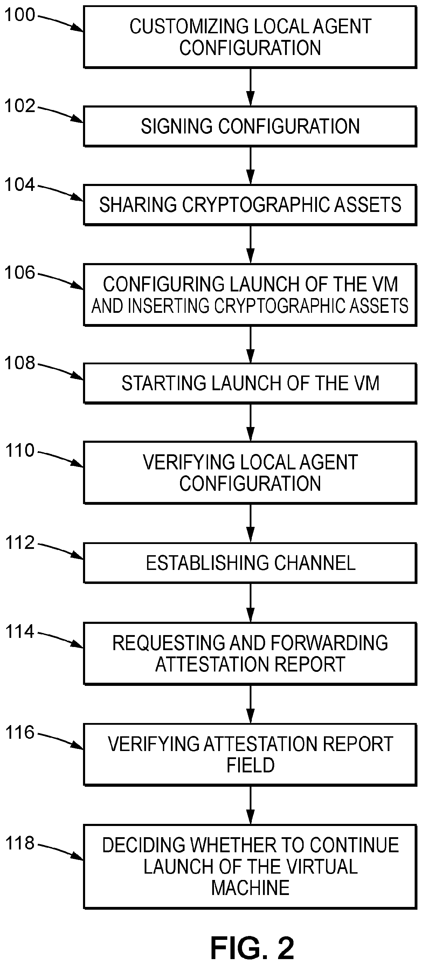

Figure 2 illustrates the steps of a method for remotely verifying the configuration of a local agent of a virtual machine, executed withing a hardware-based Trusted Execution Environment, via a protocol including remote attestation according to the present invention. The method allows the verifier 10 to remotely verify the configuration of the local agent 8.

In a first step 100, the owner of the virtual machine 2, at the remote server side, customizes, for example through a graphical user interface of the remote server 4, a predetermined configuration of the local agent 8, by setting predetermined parameters to be assigned to the local agent 8 such as the IP address of the verifier 10, protocols and network parameters necessary to establish a communication with the authorized verifier 10, a public key of the verifier 10 to verify a certificate, details of a proxy, etc.

In a next step 102, the owner of the virtual machine 2, at the remote server side, signs said predetermined configuration of the local agent 8 with predetermined cryptographic assets, for its authenticity and/or integrity check. For example, the cryptographic assets are respectively a public and a private key, and the owner of the virtual machine signs the configuration of the local agent 8 with the private key. In this case, the corresponding public key can be used to verify said signed configuration.

In a next step 104, the owner of the virtual machine 2, at the remote server side, shares the cryptographic assets with the verifier 10, for example by sending them to it or by allowing the verifier 10 to access the storage 16 where such cryptographic assets have been stored.

In a next step 106, the owner of the virtual machine 2 remotely configures, at the cloud side, the launch of the virtual machine 2, in a manner per se known, and then inserts at least one of said cryptographic assets into some attestable and immutable fields of a predetermined configuration of the virtual machine 2. In the present description, with *"attestable and immutable fields"* it is referred to fields of the configuration of the virtual machine 2 that are known by the CPU 14 at the launch of the virtual machine 2, are immutable during the whole run time of said virtual machine 2 and are reported in the attestation reports produced by the CPU 14. For example, the public key is stored into an attestable and immutable field of the configuration of the launch of the virtual machine 2. Examples of fields that are attestable by the SEV-SNP feature of AMD CPU and immutable at run time are FAMILY_ID and IMAGE_ID.

In a next step 108, the launch of the boot of the virtual machine 2 is performed, in the cloud side, by using said configuration of the virtual machine 2, in a manner per se known, up to the start of the local agent 8, performed by using said predetermined configuration of the local agent 8.

In a next step 110, before continuing the boot process of the virtual machine 2, the local agent 8 locally verifies the authenticity and/or integrity of its own configuration by using the at least one cryptographic asset inserted in the attestable and immutable fields of the configuration of the virtual machine 2 to which it has access. For example, the local agent 8 verifies the signature of its configuration, performed by the owner of the virtual machine 2 with the private key, by using the public key contained in an attestable and immutable field configured at the launch of the virtual machine 2. The local agent 8 needs to retrieve the cryptographic assets in the corresponding attestable and immutable fields to verify the authenticity and integrity of its configuration before initiating the establishment of a communication channel.

If the configuration authenticity and/or integrity is not verified, the process aborts.

If the configuration authenticity and/or integrity is verified, in a next step 112, the local agent 8, before continuing the boot process of the virtual machine 2, establishes the channel 6 with the verifier 10 by using the configuration of the local agent 8.

If the local agent 8 cannot authenticate the verifier 10 with its own configuration, the process aborts.

Otherwise, in a further step 114 before continuing the boot process of the virtual machine 2, the local agent 8 requests an attestation report to the CPU 14 and forwards it to the verifier 10.

In a next step 116, the verifier 10, before continuing the boot process of the virtual machine 2, verifies the authenticity of the received attestation report and then the validity of fields reported in said attestation report wherein cryptographic assets have been inserted, to validate the authenticity and integrity of the configuration of the local agent 8. In particular, the verifier 10 compares the values of the fields of the attestation report wherein the cryptographic assets have been inserted by the CPU 14, when preparing such attestation report, with the corresponding values received in step 104 (for example, stored in the storage 16), to check compliance, i.e., to check if they correspond or not.

In an embodiment, if the attestation report or any reported fields are invalid, the process aborts before sending any sensitive data to the local agent 8, i.e., the boot process of the virtual machine 2 is allowed to continue or to abort based on the results of the comparison step 116.

If the boot process of the virtual machine 2 is allowed to continue, in a further step 118, the verifier 10 decides whether to actually continue the boot of the virtual machine 2 or not depending on values of other fields (different from the ones containing the public assets) of the attestation report, in a manner per se known.

All the above-disclosed steps 100 - 118 can be applied in case of local agent of an application instead of local agent of a virtual machine.

Clearly, the principle of the invention remaining the same, the embodiments and the details of production can be varied considerably from what has been described and illustrated purely by way of non-limiting example, without departing from the scope of protection of the present as defined in the attached claims.

## Claims

1. A method for remotely verifying the configuration of a local agent (8) of a virtual machine (2), executed withing a hardware-based Trusted Execution Environment, via a protocol including remote attestation, the virtual machine (2) comprising said local agent (8) and being connected to a remote server (4) comprising a verifier (10), the method comprising:
- customizing (100), at a remote server side, a predetermined configuration of the local agent (8);
- signing (102), at the remote server side, said predetermined configuration of the local agent (8) with predetermined cryptographic assets;
- receiving (104), at the verifier (10), said cryptographic assets;
- remotely configuring (106), at a cloud side, the launch of the virtual machine (2) and inserting at least one of said cryptographic assets into attestable and immutable fields of a configuration of the virtual machine (2);
- launching (108), at the cloud side, the boot of the virtual machine (2) by using said configuration of the virtual machine (2) and starting the local agent (8) by using said configuration of the local agent (8),
- verifying (110), at a local agent (8) side and before continuing the boot process of the virtual machine (2), the authenticity and/or integrity of the configuration of the local agent (8) by using the at least one of said cryptographic assets of the attestable and immutable fields of the configuration of the virtual machine (2) to which it has access;
- in case of valid verification of the authenticity and/or integrity of the configuration of the local agent (8), at the virtual machine (2) side and before continuing the boot process of the virtual machine (2), establishing (112) a communication channel (6) between the local agent (8) and the verifier (10) based on the said configuration of the local agent (8);
- forwarding (114), at the virtual machine (2) side and before continuing the boot process of the virtual machine (2), to the verifier (10) an attestation report requested by the local agent (8);
- comparing (116), at the verifier (10) side and before continuing the boot process of the virtual machine (2), values of said attestable and immutable fields of the attestation report wherein cryptographic assets have been inserted with the corresponding received cryptographic assets to check compliance.

2. The method of claim 1, further comprising deciding, at the verifier (10) side, to allow the boot process of the virtual machine (2) to continue or to abort based on the results of said comparison.

3. The method of claim 2, further comprising deciding (118) whether to continue the boot process of the virtual machine (2) based on the values of other fields of the attestation report.

4. The method of claims 1 or 2, wherein customizing the predetermined configuration of the local agent (8) comprises setting predetermined parameters to be assigned to the local agent (8).

5. The method of claim 4, wherein said parameters comprises the IP address of the verifier (10), protocols and network parameters necessary to establish a communication with the verifier (10), a public key of the verifier (10) for certificate verification, details of a proxy.

6. The method of any of the above claims, wherein the cryptographic assets are a public key and a private key, the configuration of the local agent (8) being signed with the private key and the verification of the authenticity and/or integrity of the configuration of the local agent (8) being performed with the public key.

7. The method of any of the above claims, wherein the attestable and immutable fields are FAMILY_ID and IMAGE_ID of the SEV-SNP feature of AMD CPU.

8. A computer program product comprising computer readable instructions which, when implemented on a system comprising a server (4) and a virtual machine (2) executed in a hardware-based Trusted Execution Environment, perform all the steps of the method of any of claims 1-7.

9. A computer readable medium comprising the computer program of claim 8.
